# EUROPÄISCHE PATENTANMELDUNG

(11) **EP 3 996 018 A1**
(43) Veröffentlichungstag der Anmeldung: **11.05.2022**
(21) Anmeldenummer: 21206498.4
(22) Anmeldetag: 04.11.2021
(51) Int. Cl.: G06Q 10/10, G06F 16/93, G06F 40/263, G06F 40/40, G06F 40/58

(54) **VERFAHREN ZUR COMPUTERIMPLEMENTIERTEN ZUORDNUNG VON FÜR EINE BEGLAUBIGTE ÜBERSETZUNG VORGESEHENEN DOKUMENTEN**

(30) Priorität: 04.11.2020 DE 102020129099
(71) Anmelder: Yena, Nataliya, 60598 Frankfurt am Main (DE)
(72) Erfinder: Yena, Nataliya, 60598 Frankfurt am Main (DE)
(74) Vertreter: 2K Patentanwälte Blasberg Kewitz & Reichel

(57) **Zusammenfassung**

Ein Verfahren (100) zur computerimplementierten Zuordnung von für eine beglaubigte Übersetzung vorgesehenen Dokumenten soll Datensicherheit und Datenschutz erhöhen. Dazu umfasst es die Schritte:
- Empfang (102), auf einem Server (200), von jeweils einer Mehrzahl der Dokumente von einer Mehrzahl von Benutzern (208), wobei die Dokumente personenbezogene Daten enthalten;
- Bestimmung (104) der Dokumentenart durch den Server (200);
- Bildung (106) von Gruppen mit jeweils einer Mehrzahl von Dokumenten gleicher Dokumentenart durch den Server (200); und
- Übermittlung (108) einer Gruppe an einen beeidigten oder ermächtigten Übersetzer (212) durch den Server (200).

## Beschreibung

Die Erfindung betrifft ein Verfahren zur computerimplementierten Zuordnung von für eine beglaubigte Übersetzung vorgesehenen Dokumenten.

Im Rechtsverkehr mit Behörden und Gerichten werden heute häufig beglaubigte Übersetzungen von Dokumenten benötigt. Für Fachkräfte aus dem Ausland werden z.B. beglaubigte Übersetzungen von Bildungsabschlüssen für diverse amtliche Vorgänge benötigt. Gleiches gilt für Schulabschlüsse von Gaststudenten. Darüber hinaus werden häufig standesamtliche Urkunden von Eheschließungen, Geburten und Namensänderungen usw. benötigt, die aber auch für ausländische Konsulate angefordert werden. Gerichte brauchen beglaubigte Übersetzungen von Urkunden für inländische Vorgänge, aber auch im Rahmen der internationalen Rechtshilfe, die ins Ausland versendet werden. Dies können bspw. Übersetzungen in Zivilsachen, Familiensachen und Handelsstreitigkeiten sein.

Die genannten Übersetzungen werden in der Regel von gerichtlich beeidigten Dolmetschern und ermächtigten Übersetzern nach ISO 9:1995 (E) angefertigt. Dabei wird nicht nur auf eine spezielle Art und Weise transliteriert, es wird auch noch die Richtigkeit und Vollständigkeit der Übersetzung bestätigt und mit einem Siegel bekräftigt. In jüngster Zeit ist dabei die Tendenz zu beobachten, dass Kunden nicht mehr persönlich zur Beauftragung beim Übersetzter erscheinen möchten, sondern entsprechend dem heutigen Trend der Digitalisierung ihre Aufträge lieber per E-Mail erteilen und die Urkunden mit der Post zusenden. Für Kunden aus dem Ausland ist dies zudem oft die einzige Chance, eine beglaubigte Übersetzung zu beauftragen.

Es wäre daher wünschenswert, wenn die Beauftragung und Abwicklung derartiger Übersetzungen online erfolgen könnte, beispielsweise über eine geeignete Plattform, auf der Kunden sich als Benutzer anmelden und Übersetzungsaufträge hochladen können.

Hierbei ergeben sich jedoch Aufgaben hinsichtlich der Datensicherheit und des Datenschutzes. Der Benutzer hat auf einer Online-Plattform häufig keine direkte Kontrolle mehr über die hochgeladenen Dokumente, da kein direkter Kontakt mehr zu dem übersetzenden Dienstleister besteht. Gleichzeitig betreffen die oben genannten Dokumente sensible Daten - unter Umständen liegen zur Übersetzung von der Geburtsurkunde bis zum polizeilichen Führungszeugnis sämtliche offiziellen Dokumente der Lebensgeschichte des Benutzers vor und werden einem einzigen Übersetzer über die Plattform zur Verfügung gestellt.

Es ist daher Aufgabe der Erfindung, ein Verfahren der eingangs genannten Art anzugeben, welches Datensicherheit und Datenschutz erhöht.

Die Aufgabe wird erfindungsgemäß gelöst durch ein Verfahren mit den Schritten:
- Empfang, auf einem Server, von jeweils einer Mehrzahl der Dokumente von einer Mehrzahl von Benutzern, wobei die Dokumente personenbezogene Daten enthalten;
- Bestimmung der Dokumentenart durch den Server;
- Bildung von Gruppen mit jeweils einer Mehrzahl von Dokumenten gleicher Dokumentenart durch den Server; und
- Übermittlung einer Gruppe an einen beeidigten oder ermächtigten Übersetzer durch den Server.

Die Erfindung geht dabei von der Überlegung aus, dass Datensicherheit und Datenschutz erhöht werden könnten, wenn die persönlichen Dokumente eines Benutzers nicht mehr vollständig in der Hand eines Übersetzers liegen würden. Insbesondere sollten die gesamten persönlichen Dokumente des Benutzers nicht an denselben Übersetzer gesandt werden, sondern zu einem möglichst frühen Zeitpunkt auf dem Server automatisiert getrennt werden. Hierdurch wird gewährleistet, dass die dokumentierte Lebensgeschichte eines Benutzers nicht mehr gemeinsam im Zugriff steht. Eine derartige Trennung der Dokumente erhöht die Datensicherheit erheblich, im Gegensatz zur klassischen Methode wenn der einzelne Übersetzer eine größere Varianz an Dokumenten von einem Auftraggeber erhält. Allerdings erschwert diese Trennung auch die Arbeit des Übersetzers, der nun mehrere unterschiedliche Dokumente unterschiedlicher Auftraggeber erhält. Um dies auszugleichen und die Dokumente in einer Art zur Verfügung zu stellen, die auf die physischen Gegebenheiten der menschlichen Wahrnehmung und Aufnahme von Informationen Rücksicht nimmt, sollten die Dokumente automatisiert in Gruppen gleicher Dokumentenart (aber von unterschiedlichen Auftraggebern) zusammengestellt und an den jeweiligen Übersetzer übermittelt werden. Diese Gruppen werden auch als sogenannte Batches bezeichnet.

Die Bestimmung der gleichen Dokumentenart erfolgt vorteilhafterweise anhand möglichst vieler verschiedener Kriterien. Diese können beliebig kombiniert werden. Ein erstes Kriterium wäre hierbei der Urkundentyp des Dokuments, d.h. ob es sich z.B. um eine Geburtsurkunde, Heiratsurkunde, ein Abiturzeugnis o.ä. handelt. Ein weiteres Kriterium ist die Sprache des Dokuments. Weiterhin kann auch das ausstellende Land des Dokuments ein Kriterium sein. Schließlich kann auch die ausstellende Behörde oder Institution des Dokuments als Kriterium herangezogen werden.

Die genannten Kriterien werden idealerweise additiv verwendet, d.h. zwei Dokumente werden nur dann als gleiche Dokumentenart klassifiziert, wenn sie in allen Kriterien übereinstimmen. Je nach Anzahl der Dokumente oder nach spezifischer Art und Ähnlichkeit bestimmter Dokumente können aber weniger Kriterien angewendet werden.

In besonders vorteilhafter Ausgestaltung des Verfahrens erfolgt die Bestimmung der Dokumentenart mittels eines zuvor mit einer Vielzahl von Dokumentenarten angelernten Algorithmus der künstlichen Intelligenz. Hierunter werden allgemein jegliche Art von Algorithmen verstanden, die nicht mittels vorab manuell und deterministisch definierter Kriterien Dokumente klassifizieren, sondern die mittels maschinellem Lernen anhand von Trainingsdokumenten selbstständig im Wege des maschinellen Lernens das Erkennen der Dokumente anlernen. Dies können neuronale Netze sein, genetische Algorithmen, oder Algorithmen, die auf Diskriminanzanalyse, Kernregression, k-Means oder Support Vector Machines basieren. Derartige automatisierte Methoden eignen sich nämlich zum einen besonders gut zur zuverlässigen und fehlerarmen Einteilung der Dokumente, so dass kein manueller (und damit datenschutzrelevanter) Eingriff erfolgen muss. Zum anderen eignen sich die häufig auf bestimmten vorgedruckten Formularen ausgestellten Urkunden besonders gut für die Mustererkennung im Rahmen des maschinellen Lernens. Schließlich ermöglich die Architektur des Systems auch eine kontinuierliche Verbesserung: Da jedes klassifizierte Dokument letztendlich von einem menschlichen Übersetzer bearbeitet wird, wird jede automatisch getroffene Einteilung stets manuell überprüft. Eine richtige oder falsche Einteilung kann damit über die komplette Laufzeit des Systems durch eine entsprechende Rückmeldung des Übersetzers in die Trainingsdaten rückgemeldet werden, so dass diese kontinuierlich verbessert werden.

Im weiteren Verlauf des Verfahrens umfasst dieses vorteilhafterweise die Schritte:
- Empfang, auf dem Server, von Gruppen übersetzter Dokumente von einer Mehrzahl beeidigter oder ermächtigter Übersetzer;
- Zuordnung der übersetzten Dokumente zu einem Benutzer durch den Server;
- Zusammenstellung aller übersetzten Dokumente eines Benutzers durch den Server; und
- Übermittlung der zusammengestellten übersetzten Dokumente an den jeweiligen Benutzer durch den Server.
Auch auf Rückweg der übersetzten Dokumente erfolgt somit eine automatisierte Zuordnung der Dokumente zum ursprünglichen Auftraggeber, so dass auch hier keine manuelle Zusammenstellung der Dokumente erfolgen muss.

In weiterer vorteilhafter Ausgestaltung erfolgt eine Übermittlung der zusammengestellten übersetzten Dokumente an einen vom jeweiligen Benutzer vorab festgelegten Endempfänger durch den Server. Hierbei kann der Benutzer im Auftragsprozess in seinem Frontend vorab angeben, für wen die Übersetzung erstellt wird (z.B. eine bestimmte Behörde). Hier kann er entsprechende Kontaktdaten des Endempfängers angeben, so dass die Dokumente direkt an den Endempfänger gesendet werden. Hierdurch wird aufgrund der verkürzten Sendewege die Datensicherheit erhöht.

Das beschriebene Verfahren bedingt eine Einteilung der zu übersetzenden Dokumente, in der Regel Urkunden, nach Dokumentenarten. Dies ermöglicht es, zur Vereinfachung der Arbeit des Übersetzers und zur Reduktion von Fehlern Übersetzungsschablonen oder Templates für die zu übersetzenden Dokumente anzulegen und zu klassifizieren. Demnach wird vorteilhafterweise auf dem Server eine Datenbank von Übersetzungsschablonen zu einer Vielzahl von Dokumentenarten angelegt, wobei die Übersetzungsschablonen das Layout der jeweiligen Dokumentenart nachbilden und ausfüllbare Textfelder enthalten, wobei nach der Bestimmung der Dokumentenart auf dem Server eine zu der bestimmten Dokumentenart passende Übersetzungsschablone ermittelt wird, und sofern eine entsprechende Übersetzungsschablone gefunden wird, die Übersetzungsschablone mit der Gruppe durch den Server an den beglaubigten Übersetzer übermittelt wird. Eine Übersetzungsschablone enthält das Layout und graphische Elemente der Originalurkunde und kann auch bereits vorgefertigte Übersetzungen nicht variablen Textes enthalten, z.B. den aufgedruckten Namen der Urkunde, z.B. "GEBURTSURKUNDE" oder Feldbezeichnungen von auszufüllenden Feldern. Die Schablone kann z.B. im pdf-Format erstellt werden und enthält dann lediglich in den variablen Felder noch Textfelder, die durch den Übersetzer mit der korrekten Übersetzung auszufüllen sind. Wenngleich ein derartiger Datenbankdienst besondere Vorteile in Verbindung mit der beschriebenen Gruppierung von Dokumenten nach Dokumentenarten bringt, kann er auch unabhängig davon eingesetzt werden und wird daher auch explizit unabhängig von der beschriebenen Gruppierung von Dokumenten nach Dokumentenarten offenbart.

Ein Server ist vorteilhafterweise ausgebildet zum Ausführen des beschriebenen Verfahrens, und umfasst Mittel zum Darstellen eines ersten Internet-Frontends für Übersetzer und eines zweiten Internet-Frontends für Benutzer. Die Internet-Frontends dienen der Abwicklung der Auftragserteilung und - entgegennahme, der Abrechnung und Zahlung, sowie der Kommunikation im Rahmen des beschriebenen Verfahrens.

Die mit der Erfindung erzielten Vorteile liegen insbesondere darin, dass durch die automatisierte Zerlegung der Dokumente der Übersetzungsaufträge von Benutzern nach Dokumentenarten die Datensicherheit und der Datenschutz erhöht werden. Durch die Gruppierung in gleichartige Dokumentenarten wird die Arbeit des Übersetzers erleichtert. Gleiches gilt für die Verwendung and Anlage von Übersetzungsschablonen.

Ausführungsbeispiele der Erfindung werden anhand einer Zeichnung näher erläutert. Darin zeigen:
- FIG 1: ein Ablaufdiagramm eines Verfahrens zur computerimplementierten Zuordnung von für eine beglaubigte Übersetzung vorgesehenen Dokumenten, und
- FIG 2: einen Server, ausgebildet zum Ausführen des Verfahrens.

Gleiche Teile sind in allen Figuren mit denselben Bezugszeichen versehen.

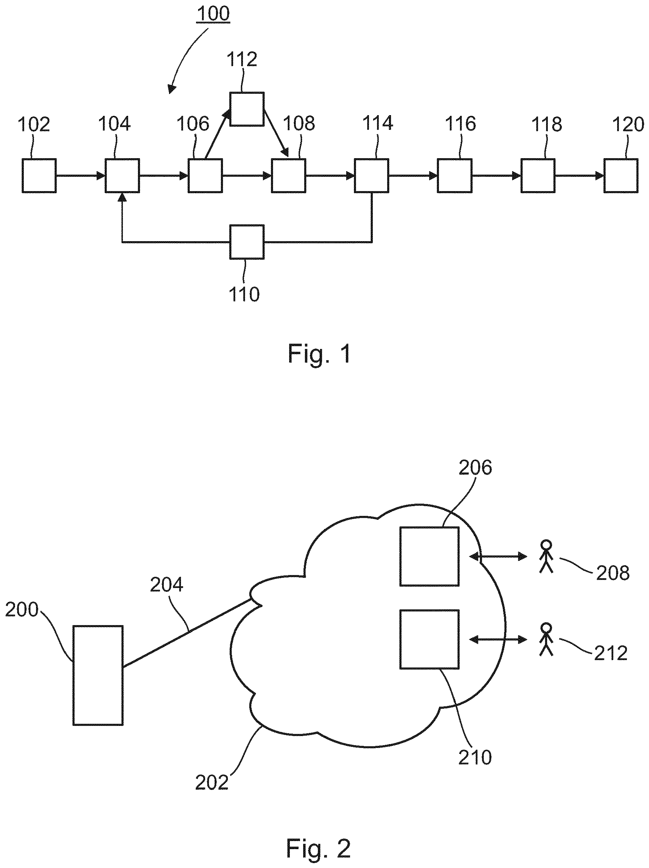

FIG 1 zeigt Ablaufdiagramm eines Verfahrens 100 zur computerimplementierten Zuordnung von für eine beglaubigte Übersetzung vorgesehenen Dokumenten, welches auf einem Server 200 ausgeführt wird, der in der FIG 2 schematisch dargestellt ist. Der Server 200 ist entweder als physischer Server 200 mit den üblichen Bestandteilen wie RAM, nicht-flüchtigem Speicher, Prozessor etc. ausgebildet, oder in virtualisierter Weise realisiert. Auf ihm läuft eine entsprechend ausgebildete Software, die den Server 200 zur Ausführung der im Folgenden beschriebenen Verfahren veranlasst.

Der Server 200 ist an das Internet 202 über eine entsprechende Netzwerkverbindung 204 angeschlossen. Er stellt Internet 202 ein erstes Frontend 206 für eine Vielzahl von Benutzern 208 zur Verfügung, die die Dienstleistungen von beeidigten oder ermächtigten Übersetzern benötigen, insbesondere zur Übersetzung von Urkunden für amtliche oder gerichtliche Zwecke. Gleichzeitig stellt der Server 200 im Internet 202 ein zweites Frontend 210 für eine Vielzahl von Übersetzern 212 zur Verfügung. Die Frontends 206, 210 sind für die Benutzer 208 bzw. Übersetzer 212 mittels eines Browsers zugänglich.

Sowohl Benutzer 208 als auch Übersetzer 212 können sich über das jeweilige Frontend 206, 210 in üblicher Weise z.B. mittels eines Benutzernamens und eines Kennworts einloggen. Für die Benutzer 208 dient das Einloggen im Wesentlichen der Auftragsvergabe, des Hochladens der eigenen Dokumente sowie der Zahlungsabwicklung. Für die Übersetzer 212 dient das Einloggen der Möglichkeit der Entgegennahme von Aufträgen sowie ggf. ebenfalls der Zahlungsabwicklung. Hierbei ist es erforderlich, dass sich die Übersetzer 212 gegenüber dem Betreiber des Servers 200 entsprechend identifizieren und ihre Eigenschaft als beeidigte oder ermächtigte Übersetzer verifizieren.

Der Ablauf des Verfahrens 100 wird nun anhand des Ablaufdiagramms von FIG 1 erläutert: Die beschriebenen angemeldeten Benutzer 208 benötigen für eine Mehrzahl von Dokumenten beglaubigte Übersetzungen. Diese laden Sie nach der Anmeldung auf dem Frontend 206 auf den Server 200 hoch und geben entsprechende Daten zur gewünschten Sprache, Fertigstellungszeit, Bezahlung etc. ein. Dies wird von einer Vielzahl von Benutzern 208 durchgeführt. Der Server 200 empfängt in Schritt 102 somit eine Mehrzahl von Dokumenten von einer Mehrzahl von Benutzern. Diese Dokumente sind, da sie eine beglaubigte Übersetzung benötigen, personenbezogen. Es handelt sich beispielsweise um Geburtsurkunden, Heiratsurkunden, Abschlusszeugnisse etc.

Alternativ zum Hochladen durch die Benutzer 208 im Frontend 206 besteht in Ausführungsformen auch die Möglichkeit, die Dokumente direkt per Post an den Betreiber des Servers 200 zu senden. Die Dokumente werden dann von einem mit dem Server 200 datenseitig verbundenen Scanner (nicht gezeigt) gescannt. Hierdurch wird die für die Übersetzung von Urkunden wichtige Vollständigkeit der Urkunde gewährleistet.

Zur Sicherstellung der Datensicherheit und des Datenschutzes erfolgt daher keine direkte Weiterleitung der Dokumente eines Benutzers 208 zu einem Übersetzer 212, sondern es erfolgt eine automatisierte Vorverarbeitung durch den Server 200. In Schritt 104 bestimmt der Server 200 automatisiert mittels Methoden der künstlichen Intelligenz die Dokumentenart jedes empfangenen Dokuments. Dies bedeutet, dass der im Server 200 hinterlegte Algorithmus durch maschinelles Lernen anhand von einer Vielzahl von den Trainingsdokumenten das Erkennen der Dokumente angelernt hat. Derartige Algorithmen können in verschiedenen Ausführungsbeispielen neuronale Netze sein, genetische Algorithmen, oder Algorithmen, die auf Diskriminanzanalyse, Kernregression, k-Means oder Support Vector Machines basieren.

Nach der Bestimmung 104 der Dokumentenart bildet der Server 200 in Schritt 106 Gruppen mit jeweils einer Mehrzahl von Dokumenten gleicher Dokumentenart. Die Bestimmung 104 der Dokumentenart und Bildung 106 der Gruppen erfolgt dabei im Ausführungsbeispiel auf der Urkundenart, der Sprache, der ausstellenden Behörde und des Landes. Als zufällig herausgegriffenes Beispiel werden alle empfangenen Abschlusszeugnisse in französischer Sprache von der kanadischen Universität von Montreal in einer Gruppe zusammengefasst. Damit werden zum einen die persönlichen Dokumente eines Benutzers 208 voneinander getrennt, was hinsichtlich des Datenschutzes und der Datensicherheit von Vorteil ist, zum andern werden Gruppen mit einer Mehrzahl gleichartiger Dokumente einer Dokumentenart gebildet. Anstatt nun die eingangsseitig vorliegenden kompletten Dokumente eines Benutzers (Geburtsurkunde, Abiturzeugnis, Abschlusszeignis etc.) gruppiert vorliegen zu haben, liegen nun zur Übersetzung beispielsweise fünf Abschlusszeugnisse in französischer Sprache von der kanadischen Universität von Montreal vor, die gruppiert sind.

Diese so entstandenen Gruppen werden den Übersetzern 212 auf dem Frontend 210 nun zur Übersetzung angeboten, so dass eine sehr effiziente Übersetzungsarbeit erfolgen kann. Nimmt ein Übersetzer 212 den Übersetzungsauftrag an, wird die Gruppe in Schritt 108 an den Übersetzer übermittelt. Hierbei können Randbedingungen wie Honorar, Fertigstellungszeit etc. direkt mitberücksichtigt werden. In einer Ausführungsform des Verfahrens 100 wird dem empfangenden Übersetzer 212 die Möglichkeit gegeben, eine Rückmeldung zur Gruppierung der Dokumente zu geben. Hat der Server 200 in Schritt 104 eine Dokumentenart falsch bestimmt und somit in Schritt 106 das entsprechende Dokument falsch gruppiert, so kann der Übersetzer 212 dies in Schritt 110 zurückmelden. Diese Information kann dann in die Trainingsdaten der Künstlichen Intelligenz einfließen, so dass der Schritt 104 des Bestimmens optimiert wird.

Weiterhin existiert in einem Ausführungsbeispiel auf dem Server 200 eine Datenbank, in der Übersetzungsschablonen enthalten sind. Solche Übersetzungsschablonen enthalten das Layout und graphische Elemente der Originalurkunde und können auch bereits vorgefertigte Übersetzungen nicht variablen Textes enthalten, z.B. den aufgedruckten Namen der Urkunde, z.B. "GEBURTSURKUNDE" oder Feldbezeichnungen von auszufüllenden Feldern. Die Schablone kann z.B. im pdf-Format erstellt werden und enthält dann lediglich in den variablen Felder noch Textfelder, die durch den Übersetzer mit der korrekten Übersetzung auszufüllen sind. Vorteilhafterweise kann auch ein offenes Format wie z.B. Word (.doc oder .docx) verwendet werden, dass die Benutzung von Textfeldern erlaubt.

Im optionalen Schritt 112 erfolgt durch den Server 200 zunächst zu jeder erstellten Gruppe eine Suche in der Datenbank, ob zu der Dokumentenart der jeweiligen Gruppe eine Übersetzungsschablone vorliegt. Falls ja, kann diese in Schritt 108 mit an den Übersetzer 212 übermittelt werden, so dass die Arbeit des Übersetzers 212 erleichtert und optimiert wird. Fehler werden hierdurch reduziert. Die Übermittlung der Übersetzungsschablone kann auch optional sein und nur angeboten werden, oder ggf. an eine monetäre Gegenleistung des Übersetzers 212 gekoppelt sein.

Schließlich werden in Schritt 114 die von den Übersetzern 212 übersetzten Gruppen von Dokumenten auf dem Server 200 wieder empfangen. Die Gruppen werden in Schritt 116 wieder getrennt und den ursprünglichen Benutzern 208 zugeordnet. In Schritt 118 erfolgt die Zusammenstellung der - nun von unterschiedlichen Übersetzern 212 übersetzten - Dokumente jeweils eines Benutzers 208. Schließlich werden die übersetzten Dokumente, nachdem sie vollständig vorliegen, in Schritt 120 an den jeweiligen Benutzer 208 übermittelt.

Der Empfang und die Übermittlung können dabei auf verschiedene Arten erfolgen, abhängig von der Art der Erstellung der Übersetzung durch die Übersetzer 212. Die Übersetzer 212 werden die Übersetzungen digital erstellen. Sie können Sie dann einerseits ausdrucken und manuell beglaubigen und ausfertigen. In diesem Fall werden die Dokumente per Post oder Boten an den Betreiber des Servers 200 weitergeleitet. Andererseits können die Übersetzer 212 auch ein digitales Dokument, z.B. ein PDF-Dokument erstellen, welches mittels qualifizierter elektronischer Signatur mit einem Zeitstempel versehen und authentifiziert wird. Ein solches Dokument können die Übersetzer (ggf. zusammen mit einer Textverarbeitungs-Ursprungsdatei und einer unsignierten Fassung des digitalen Dokuments) in ihrem Frontend 210 hochladen. Den Benutzern 208 wird dann ebenfalls nur die digital signierte Variante zur Verfügung gestellt.

Alternativ oder zusätzlich zu der Übersendung an die Benutzer 208 kann der Server 200 auch direkt eine Übersendung an eine Institution oder eine Person veranlassen (entweder digital oder per Post), für die die Übersetzung bestimmt war. Der Benutzer 208 kann dies bei der Beauftragung im Frontend 206 angeben. Hierdurch werden die Kommunikationswege verkürzt und somit ebenfalls die Datensicherheit erhöht.

### Bezugszeichenliste

- 100: Verfahren
- 102: Schritt: Empfang
- 104: Schritt: Bestimmung
- 106: Schritt: Bildung
- 108: Schritt: Übermittlung
- 110: Schritt: Rückmeldung
- 112: Schritt: Suche
- 114: Schritt: Empfang
- 116: Schritt: Zuordnung
- 118: Schritt: Zusammenstellung
- 120: Schritt: Übermittlung
- 200: Server
- 202: Internet
- 204: Netzwerkverbindung
- 206: Frontend
- 208: Benutzer
- 210: Frontend
- 212: Übersetzer

## Patentansprüche

1. Verfahren (100) zur computerimplementierten Zuordnung von für eine beglaubigte Übersetzung vorgesehenen Dokumenten, mit den Schritten:
- Empfang (102), auf einem Server (200), von jeweils einer Mehrzahl der Dokumente von einer Mehrzahl von Benutzern (208), wobei die Dokumente personenbezogene Daten enthalten;
- Bestimmung (104) der Dokumentenart durch den Server (200) ;
- Bildung (106) von Gruppen mit jeweils einer Mehrzahl von Dokumenten gleicher Dokumentenart durch den Server (200); und
- Übermittlung (108) einer Gruppe an einen beeidigten oder ermächtigten Übersetzer (212) durch den Server (200) .

2. Verfahren (100) nach dem vorhergehenden Anspruch, wobei die gleiche Dokumentenart anhand der Urkundenart des Dokuments bestimmt wird.

3. Verfahren (100) nach einem der vorhergehenden Ansprüche, wobei die gleiche Dokumentenart anhand der Sprache des Dokuments bestimmt wird.

4. Verfahren (100) nach einem der vorhergehenden Ansprüche, wobei die gleiche Dokumentenart anhand des ausstellenden Landes des Dokuments bestimmt wird.

5. Verfahren (100) nach einem der vorhergehenden Ansprüche, wobei die gleiche Dokumentenart anhand der ausstellenden Behörde oder Institution des Dokuments bestimmt wird.

6. Verfahren (100) nach einem der vorhergehenden Ansprüche, wobei die Bestimmung der Dokumentenart mittels eines zuvor mit einer Vielzahl von Dokumentenarten angelernten Algorithmus der künstlichen Intelligenz erfolgt.

7. Verfahren (100) nach einem der vorhergehenden Ansprüche, weiter umfassend die Schritte:
- Empfang (114), auf dem Server (200), von Gruppen übersetzter Dokumente von einer Mehrzahl beglaubigter Übersetzer;
- Zuordnung (116) der übersetzten Dokumente zu einem Benutzer;
- Zusammenstellung (118) aller übersetzten Dokumente eines Benutzers durch den Server (200); und
- Übermittlung (120) der zusammengestellten übersetzten Dokumente an den jeweiligen Benutzer (208) durch den Server (200).

8. Verfahren (100) nach Anspruch 7, weiter umfassend:
- Übermittlung der zusammengestellten übersetzten Dokumente an einen vom jeweiligen Benutzer (208) vorab festgelegten Endempfänger durch den Server (200).

9. Verfahren (100) nach einem der vorhergehenden Ansprüche, wobei auf dem Server eine Datenbank von Übersetzungsschablonen zu einer Vielzahl von Dokumentenarten angelegt wird, wobei die Übersetzungsschablonen das Layout der jeweiligen Dokumentenart nachbilden und ausfüllbare Textfelder enthalten,
wobei nach der Bestimmung der Dokumentenart auf dem Server eine zu der bestimmten Dokumentenart passende Übersetzungsschablone ermittelt wird, und
sofern eine entsprechende Übersetzungsschablone gefunden wird, die Übersetzungsschablone mit der Gruppe durch den Server an den beglaubigten Übersetzer übermittelt wird.

10. Server (200), ausgebildet zum Ausführen des Verfahrens nach einem der vorhergehenden Ansprüche, umfassend Mittel zum Darstellen eines ersten Internet-Frontends (210) für Übersetzer (212) und eines zweiten Internet-Frontends (206) für Benutzer (208).
